Europäisches Patentamt

European Patent Office (11) Numéro de publication: **0 049 220**

Office européen des brevets **B1**

(12) **FASCICULE DE BREVET EUROPEEN**

(45) Date de publication du fascicule du brevet: **18.12.85** (51) Int. Cl.⁴: **G 01 N 21/41**

(21) Numéro de dépôt: **81810378.0**

(22) Date de dépôt: **14.09.81**

(54) **Dispositif à double sonde optique pour déterminer l'indice de réfraction d'un fluide ramené à une température de référence prédéterminée.**

(30) Priorité: **18.09.80 CH 6998/80**

(43) Date de publication de la demande:
**07.04.82 Bulletin 82/14**

(45) Mention de la délivrance du brevet:
**18.12.85 Bulletin 85/51**

(84) Etats contractants désignés:
**AT BE CH DE FR GB IT LI LU NL SE**

(56) Documents cités:
**EP-A-0 000 319**
**US-A-2 421 854**
**US-A-2 427 996**
**US-A-3 751 672**

(73) Titulaire: **Stanley Electric Co., Ltd.**
**2-9-13, Nakameguro**
**Meguri-ku Tokyo (JP)**

(72) Inventeur: **Harmer, Alan Lewis**
**13, Bernex en Combes**
**CH-1223 Bernex (CH)**

(74) Mandataire: **Dousse, Blasco et al**
**7, route de Drize**
**CH-1227 Carouge/Genève (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

Domaine technique

La présente invention a pour objet un dispositif à double sonde optique pour déterminer l'indice de réfraction d'un fluide ramené à une température de référence prédéterminée, ledit dispositif étant adapté pour donner lieu à une erreur plus positive que l'erreur négative inhérente à un dispositif à sonde optique unique (ce qui ouvre ainsi notamment la possibilité, dans le cas où cela est désiré, de réaliser une compensation quasi parfaite en température, ou voire même une certaine surcompensation).

Technique antérieure

On connaît déjà de nombreux types de réfractomètres pour déterminer l'indice de réfraction de fluides, dont beaucoup sont basés sur l'exploitation des phénomènes de réflexion et réfraction se déroulant au voisinage de l'angle critique (angle critique dont on sait qu'il est variable en fonction de l'indice de réfraction du fluide). Parmi ces derniers se trouvent notamment les réfractomètres à immersion, qui constituent des instruments de mesure permettant d'allier de façon remarquable simplicité et précision. De tels réfractomètres à immersion comprennent généralement une sonde optique unique constituée par une structure conductrice de la lumière destinée à être immergée dans le liquide à mesurer, laquelle structure conductrice est adaptée pour véhiculer de la lumière par réflexions internes multiples entre son entrée et sa sortie en donnant lieu à un passage de lumière par réfraction dans le liquide qui est fonction de l'indice de réfraction de ce liquide (de telles structures conductrices pouvant ainsi, à titre d'exemple, être notamment constituées par des structures telles que des prismes agencés à l'extrémité de tiges transparentes, ou bien des structures telles que de simples tiges transparentes ou fibres optiques incurvées de manière appropriée, etc...). La quantité de lumière transmise jusqu'en sortie de la sonde optique constitutive de ces réfractomètres à immersion s'avère par conséquent être également fonction de l'indice de réfraction du liquide à tester, de sorte que la détermination de cet indice de réfraction peut être ainsi aisément obtenue par simple mesure de cette quantité de lumière transmise jusqu'en sortie de la sonde. A cet effet, la sortie de la sonde optique de ces réfractomètres à immersion est généralement équipée d'un convertisseur photoélectrique chargé d'élaborer un signal électrique correspondant à la quantité de lumière émergeant en sortie de la sonde, ce signal électrique étant alors dirigé sur un organe d'affichage approprié directement calibré en unités d'indice de réfraction, de façon à permettre la lecture directe de la valeur de l'indice recherché sur cet organe d'affichage (le calibrage de cet organe d'affichage étant quant à lui effectué de manière connue à une température de référence bien déterminée, à l'aide de liquides d'étalonnage dont on connait précisément la valeur de l'indice de réfraction à cette température de référence prédéterminée).

On sait toutefois que l'indice de réfraction "$n_l$" de pratiquement tous les liquides décroit lorsque la température augmente, selon un coefficient en température "$dn_l/dT$" pouvant varier d'environ $-2 \times 10^{-4}$/°C à $-6 \times 10^{-4}$/°C selon les liquides. Or le résultat le plus généralement recherché dans la pratique en ce qui concerne la détermination de l'indice de réfraction d'un liquide donné est de pouvoir déterminer, quelque soit la température réelle "$T$" à laquelle cette détermination est effectuée, la valeur "$n_{lo}$" de l'indice de réfraction de ce liquide ramenée à une température de référence prédéterminée "$T_o$" (généralement la température ambiante), plutôt que la valeur réelle "$n_l$" de l'indice de réfraction présenté par ce liquide à la température de mesure "$T$". Cette détermination de la valeur "$n_{lo}$" de l'indice de réfraction ramené à une température de référence prédéterminée "$T_o$" est en effet la seule qui présente un intérêt véritable dans la plupart des applications, notamment dans tous les cas où la détermination de l'indice de réfraction d'un liquide donné sert en fait ensuite à assurer la détermination d'une autre caractéristique "$Q$" de ce liquide liée à son indice de réfraction (comporte tenu de ce que la corrélation existant entre cette caractéristique "$Q$" et l'indice de réfraction ne se trouve en règle générale connue de l'utilisateur que pour la seule température de référence $T_o$). Comme application particulièrement avantageuse de cette détermination d'indice de réfraction "$n_{lo}$" ramené à une température de référence prédéterminée "$T_o$", on peut ainsi citer à titre d'exemple non exclusif la détermination de l'état de charge "$Q$" d'un accumulateur d'énergie électrique tel qu'un accumulateur acide-plomb, pour lequel il existe une corrélation bien connue dans la littérature entre cet état de charge "$Q$" et l'indice de réfraction "$n_{lo}$" de l'électrolyte de cet accumulateur à la température ambiante "$T_o$" ($T_o$ étant fixé à 20°C).

L'utilisation de réfractomètres à sonde unique (tels que décrits plus haut) en vue de déterminer l'indice de réfraction "$n_{lo}$" d'un liquide donné ramené à une température de référence prédéterminée "$T_o$" ne peut dès lors donner lieu, ainsi que cela sera démontré plus en détails ultérieurement, qu'à un résultat qui se trouve obligatoirement entaché d'une erreur fortement négative dès que la température à laquelle est effectuée cette détermination diffère de la température de référence (compte tenu des variations inévitables de l'indice de réfraction du liquide à tester en fonction de la température). Cette erreur négative inhérente à de tels réfractomètres à sonde unique s'avère en fait, dans les cas où l'indice de réfraction du matériau transparent constitutif de la sonde est pratiquement insensible aux variations en température (cas par exemple de verre dont l'indice de réfraction présente un coefficient en température de l'ordre

de $-10^{-6}/°C$, laquelle valeur reste parfaitement négligeable devant celle de la plupart des liquides), être d'une grandeur sensiblement égale à celle du coefficient en température du liquide à tester, à savoir une grandeur de l'ordre de $-2×10^{-4}$ à $-6×10^{-4}/°C$ selon le liquide testé (étant donné que l'organe d'affichage du réfractomètre indique en fait dans un tel cas la valeur réelle $n_l$ de l'indice de réfraction présenté par le liquide à la température de mesure, et non la valeur $n_{lo}$ de cet indice ramené à la température de référence). On pourrait envisager théoriquement de réduire fortement ou voire même d'annuler quasi-complètement cette erreur négative, en prévoyant d'utiliser comme matériau transparent solide constitutif de la sonde un matériau dont l'indice de réfraction présenterait un coefficient en température sensiblement égal à celui du liquide à tester. Un tel matériau solide transparent n'existe malheureusement pas dans la pratique (les matériaux solides transparents ayant les coefficients en température les plus élevés étant en effet constitués par certains types de matières plastiques dont le coefficient en température ne dépasse guère des valeurs de l'ordre de $-1×10^{-4}/2C$), de sorte que les réfractomètres à sonde unique utilisés pour la détermination de l'indice de réfraction ramené à une température de référence prédéterminée restent immanquablement entachés, pour des températures d'utilisation différant de cette température de référence, d'une erreur négative dont la grandeur ne saurait guère descendre, quelque soit le matériau adopté, au dessous d'une valeur de l'ordre de $-1×10^{-4}/°C$.

Diverses solutions ont été proposées pour réaliser des réfractomètres dans lesquels la mesure est moins dépendante de la température, grâce à un mode de compensation de la mesure. C'est ainsi que dans le US—A—3.751.672, on dispose en série avec la diode électroluminescente constituant la source de lumière et la photodiode, des éléments destinés à compenser la dépendance de la lumière de la diode électroluminescente et de la photodiode. Ces éléments sont en particulier des thermisistances présentant une résistance d'environ 200 Ohms à la température ambiante. Une telle solution vise à rendre l'intensité lumineuse émise et celle qui est mesurée indépendantes de la température. Toutefois, cette solution ne propose pas de compensation de la variation d'indice de réfraction du liquide en fonction de la température, de sorte que la mesure effectuée sera fonction de ce paramètre dont on cherche précisément à s'affranchir.

Une solution a été décrite par le US—A—2.427.996 en proposant d'utiliser deux prismes symétriquement inversés. L'un de ces prismes contient une substance dont l'indice de réfraction change en fonction de la température sensiblement comme le liquide à mesurer. L'autre prisme est traversé par le liquide à mesurer et ces deux prismes sont plongés dans de l'eau. Les changements d'indice de réfraction en fonction de la température seront donc les mêmes dans chaque prisme, mais étant donnée qu'ills sont symétriquement inversés, les deux effets s'annulent, de sorte que le faisceau de lumière qui les traverse n'est dévié qu'en fonction de la différence d'indice de réfraction dû à la nature de chacun de ces liquides.

Enfin le US—A—2.421.854 propose de réaliser une compensation de l'indice de réfraction en fonction d'une température déterminée en utilisant deux faisceaux de lumière dont l'un est dévié dans un prisme creux par le fluide à mesurer. L'autre faisceau traverse un prisme immergé dans le liquide à mesurer et à la même température que lui. L'indice de réfraction de ce prisme change en fonction de la température comme celui du liquide à analyser. Ce second prisme peut avantageusement être creux et contenir un échantillon du liquide à analyser d'une composition déterminée. Les deux faisceaux sont déviés et peuvent être amenés contre une plaque présentant plusieurs fentes disposées à intervalles déterminés. Si le dispositif est agencé pour que, à une température donnée, les faisceaux arrivent juste dans les fentes ou juste entre elles, tout changement de température qui se traduira par une changement de l'indice de réfraction déplacera les deux faisceaux proportionnellement et si les fentes sont ensuite déplacées, le faisceau de mesure donnera toujours une mesure précise indépendamment des changements de température du fluide à travers lequel il passe.

On peut encore signaler que, sans se rapporter à un réfractomètre à compensation thermique, le EP—A1—0 000 319 décrit une sonde à double courbure alternée dans laquelle la quantité de lumière émergeant à la sortie varie exponentiellement en fonction de l'indice de réfraction du fluide dans lequel elle est plongée.

La présente invention a pour but un dispositif à double sonde optique pour déterminer l'indice de réfraction d'un fluide ramené à une température de référence prédéterminée, qui est adapté pour donner lieu à une erreur sur ladite détermination plus positive que l'erreur négative inhérente à un dispositif à sonde optique unique. Une telle solution fournit ainsi notamment la possibilité, suivant les applications désirées, de réaliser une compensation quasi-parfaite en température (erreur sensiblement réduite à zéro), ou voire même une certaine surcompensation en température (erreur rendue positive).

A cet effet, la présente invention a pour object un dispositif à sonde optique déterminer l'indice de réfraction d'un fluide selon la revendication 1.

La présente invention à également pour objet un dispositif à sonde optique pour déterminer l'indice de réfraction d'un fluide selon la revendication 4.

Dans les dispositifs à sonde optique tels que définis dans les revendications 1 et 4 l'expression générale "corps conducteur de la lumière se composant d'une section d'entrée et d'une section de sortie raccordées l'une à l'autre par une section intermédiaire" entend désigner toute structure optique capable de véhiculer de la lumière par réflexions internes multiples depuis la section d'entrée jusqu'à la section de sortie de cette structure. Une telle expression entend ainsi notamment englober des structures aussi diverses que des structures dont la section intermédiaire est constituée par une surface prismatique (les sections d'entrée et de sortie raccordées à cette surface prismatique pouvant alors à titre d'exemple être constituées par des corps conducteurs de lumière longilignes tels que des tiges transparentes ou des fibres optiques), ou que des structures constituées en totalité par des corps conducteurs de lumière longilignes (tels que des tiges transparentes ou des fibres optiques).

Dans les dispositifs à sonde optique tels que définis dans les revendications 1 et 4, l'expression générale "moyens pour élaborer un signal correspondant à la différence on au quotient des quantité de lumière émergeant respectivement des sections de sortie des première et seconde sondes optiques" entend par ailleurs désigner aussi bien des moyens purement optiques donnant lieu à l'élaboration d'un signal résultant optique (la différence ou le quotient des quantités de lumière émergeant des sondes étant alors réalisée par des organes purement optiques) que des moyens "optoélectroniques" donnant lieu à l'élaboration d'un signal résultant électrique (les quantités de lumière émergeant des sonde étant alors préférentiellement transformées en signaux électriques correspondants par des organes appropriés tels que des convertisseurs photoélectriques, de façon à permettre l'élaboration ultérieure à l'aide d'organes électroniques appropriés de la différence ou du quotient de ces signaux électriques, à l'aide d'organes électroniques appropriés).

Brève description des dessins

Le dessin annexé illustre, schématiquement et à titre d'exemple, deux formes d'exécution du dispositif, objet de la présente invention.

Les fig. 1a et 1b sont des vues en coupe longitudinale schématique, illustrant deux dispositifs à sonde optique unique connus de l'état de la technique.

Les fig. 2a et 2b sont des diagrammes illustrant l'erreur relative aux dispositifs des fig 1a et 1b.

La fig. 3 est une vue en coupe longitudinale analogue à celle des fig. 1a et 1b, illustrant une première forme d'exécution du dispositif à double sonde optique selon l'invention.

La fig. 4 est une vue en coupe longitudinale analogue à celle de la fig. 3, illustrant une seconde forme d'exécution.

Meilleures manières de réaliser l'invention

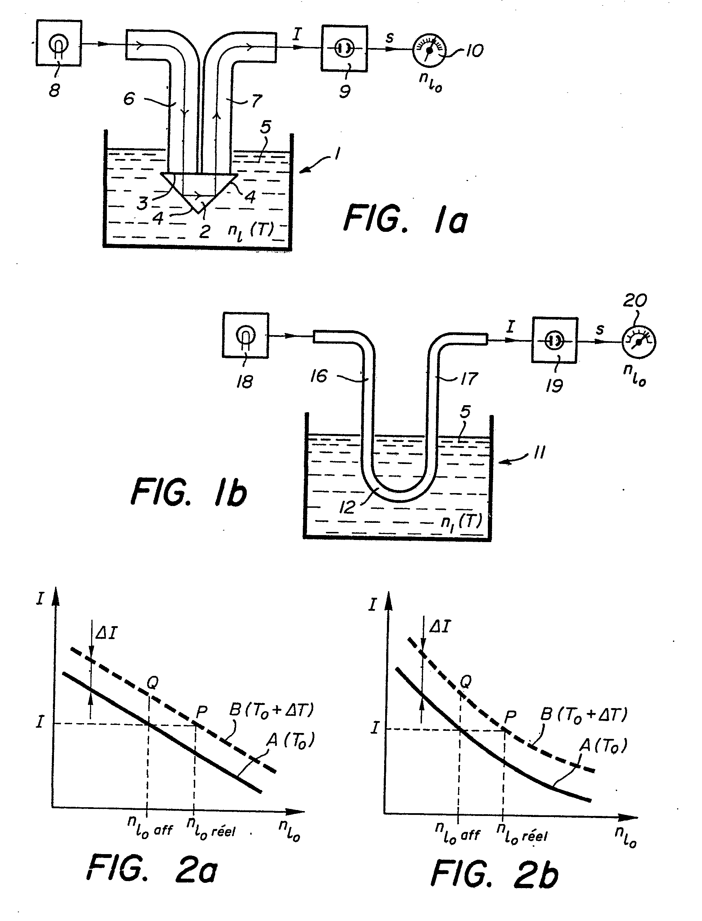

Les fig. 1a et 1b illustrent à titre d'exemple deux dispositifs à sonde optique unique connus de l'état de la technique, conçus pour assurer la détermination de l'indice de réfraction "$n_{Io}$" d'un fluide ramené à une température de référence prédéterminée "$T_o$" (le mode de fonctionnement de ces dispositifs se trouvant par ailleurs illustré par les diagrammes des fig. 2a et 2b). Ces deux premières illustrations ont pour but de montrer de quelle erreur se trouve entachée la détermination ainsi effectuée avec ces dispositifs à sonde unique connus lorsque la température T à laquelle est effectuée cette détermination diffère de la température de référence $T_o$, afin de permettre l'établissement d'une comparaison précise avec l'erreur susceptible de résulter des dispositifs à double sonde optique selon l'invention, qui vont être décrits par la suite.

Le dispositif représente à la fig. 1a comprend une sonde optique unique 1, se composant d'un prisme 2 comportant une base 3 et deux autres faces 4 inclinées d'un même angle par rapport à la base 3. Le prisme 2, qui est fait en un matériau transparent d'indice de réfraction "$n_p$", est immergé dans un liquide à tester 5 d'indice de réfraction "$n_I$" (les indices de réfraction respectifs "$n_p$" et "$n_I$" variant en fonction de la température "T" régnant au moment de la mesure). La sonde optique 1 comprend encore deux conducteurs de lumière 6 et 7 raccordés rigidement par l'une de leurs extrémités à la face 3 du prisme 2, qui sont destinés à servir respectivement de section d'entrée et de section de sortie pour la sonde. En regard de l'extrémité libre de la section d'entrée 6 de la sonde 1 se trouve disposée une source lumineuse 8, chargée d'injecter une quantité de lumière prédéterminée à l'intérieur de la sonde 1. La lumière ainsi injectée en entrée de la sonde 1 est alors véhiculée jusqu'en sortie de cette dernière après avoir subi deux réflexions successives sur les faces inclinées 4 du prisme 2 immergé dans le liquide à tester 5. Ces deux réflexions successives sur les faces du prisme donnent lieu, ainsi qu'il est connu, à un passage de lumière par réfraction dans le liquide 5 qui est fonction de l'indice de réfraction de ce liquide, de sorte que la quantité de lumière "I" transmise jusqu'en sortie de la sonde s'avère également être fonction de cet indice de réfraction. En regard de la section de sortie 7 de la sonde 1 se trouve par ailleurs disposé un transducteur photoélectrique 9, chargé d'élaborer un signal électrique "s" représentatif de cette quantité de lumière "I" émergeant de la section de sortie 7 (le transducteur 9 étant en fait choisi de façon que le signal élaboré "s" soit directement proportionnel à la quantité "I", selon la relation $s = \alpha I$, où $\alpha$ désigne le coefficient de proportionalité). Le transducteur photoélectrique 9 est enfin connecté à un organe d'affichage 10, chargé d'afficher directement la valeur de l'indice de réfraction "$n_{Io}$" du fluide testé 5 ramène à la température de référence prédéterminée "$T_o$" (Cette température de référence prédéterminée "$T_o$" pouvant à titre d'exemple être la température ambiante, fixée à 20°C).

Afin de permettre l'affichage sus-mentionné, l'organe d'affichage 10 est calibré directement en unités d'indice de réfraction, ce calibrage étant opéré à la température de référence "$T_o$" à l'aide

de liquides d'étalonnage dont on connait précisément les valeurs d'indice "$n_{lo}$" à cette température "$T_o$". Un tel calibrage ou étalonnage se trouve mieux illustré par la courbe A représentée en traits pleins sur le diagramme de la fig. 2a, qui montre les variations de la quantité de lumière "I" transmise par le sonde 1 en fonction de l'indice de réfraction "$n_{lo}$" des liquides d'étalonnage maintenus à la température de référence $T_o$. On constate que la nature particulière de la sonde 1 (constituée par un prisme 2) donne lieu à une quantité de lumière transmise "I" qui varie linéairement en fonction de l'indice "$n_{lo}$", cette variation linéaire I ($n_{lo}$) pouvant s'exprimer à l'aide de la relation:

$$I = f(n_{lo}) = C - (mn_{lo})$$

où "C" désigne une constante

et "m" la pente "$dI/dn_{lo}$" de la droite A, ce paramère "m" représentant en fait la sensibilité de la sonde 1 relativement aux variations de l'indice de réfraction du liquide à tester.

Les dispositif décrit étant ainsi calibré, son mode opératoire est alors le suivant: le prisme 2 de la sonde 1 constitutive de ce dispositif étant immergé dans un liquide inconnu dont on veut déterminer l'indice de réfraction "$m_{lo}$" ramené à la température de référence "$T_o$", l'injection d'une quantité de lumière prédéterminée en entrée de la sonde 1 donne alors lieu à une quantité de lumière "I" transmise en sortie de cette sonde qui se traduit par l'affichage d'une valeur "$n_{lo}$ aff" sur l'organe d'affichage 10 (cf courbe d'étalonage A représentée sur le diagramme de la fig. 2a, où cette valeur "$n_{lo}$ aff" est donnée par l'abscisse du point O de la courbe A dont l'ordonnée est constituée par la valeur "I" ainsi élaborée par la sonde). Cette valeur "$n_{lo}$" correspond bien à la valeur réelle "$n_{lo}$ reel" recherchée dans le cas où la température T du système sonde 1 liquide 5 se trouve être égale à la température de référence $T_o$. Cette valeur "$n_{lo}$ aff" se trouve par contre différer sensiblement de la valeur "$n_{lo}$ reel" recherchée dans le cas où la température T du système s'avère ne plus être égale à la température de référence $T_o$, l'erreur E ainsi faite sur la détermination de l'indice "$n_{lo}$" ramené à la température de référence $T_o$ étant alors donnée par la relation:

$$E = \frac{n_{lo}\ reel - n_{lo}\ aff}{\Delta T}$$

où $\Delta T$ désigne l'écart entre la température de mesure T et la température de référence $T_o$.

Cette erreur E peut être aisément calculée à partir du diagramme de la fig. 2a, en faisant figurer sur un tel diagramme la droite B (tracée en pointillés) représentant la variation de la quantité de lumière "I" réellement transmise par la sonde 1 à la température T en fonction des variations de l'indice "$n_{lo}$" du liquide ramené à la température de référence $T_o$, laquelle variation obéit à la relation:

$$I = f(n_{lo}) + \frac{dI}{dT}\Delta T = C - (m \cdot n_{lo}) + \frac{dI}{dT}\Delta T$$

où $dI/dT$ représente la dérivée de la grandeur I en fonction de la température T.

On constate donc que la droite B est une droite translatée de la droite d'étalonnage A d'une valeur $\Delta I$ telle que:

$$\Delta I = \frac{dI}{dT}\Delta T$$

La valeur réelle "$n_{lo}$ reel" recherchée est ainsi donnée sur le diagramme de la fig 2a par l'abscisse du point P de la courbe B dont l'ordonnée est toujours constituée par la valeur "I" élaborée par la sonde à la température I, de sorte que l'erreur E peut alors s'écrire:

$$E = \frac{n_{lo}\ reel - n_{lo}\ aff}{\Delta T} = \frac{OP}{\Delta T}$$

soit encore, en considérant que $OQ = \Delta I$ et que $OQ/OP = $ pente des droites A et $B = dI/dn_{lo}$:

$$E = \frac{dI/dT}{dI/dn_{lo}}$$

Il faut calculer maintenant la dérivée $dI/dT$, afin de déterminer la valeur E en fonction des paramètres du système sonde 1-liquide 5.

On sait que dans n'importe quelle sonde optique conçue pour déterminer les indices de réfraction "$n_l$" d'un liquide, la quantité de lumière "I" transmise par la sonde est une fonction de l'indice de réfraction "$n_p$" de la sonde et de l'indice de réfraction "$n_l$" de ce liquide (les indices "$n_p$" et "$n_l$" étant eux-mêmes fonction de la température T du système), selon la relation:

$$I = f(n_l/n_p) = f[n_l(T)/n_p(T)]$$

La dérivé $dI/dn_l$, qui constitue comme sus-indiqué la sensibilité "m" de la sonde relativement aux variations de l'indice de réfraction du liquide, peut alors s'écrire (en posant $z = n_l/n_p$):

$$dI/dn_l = m = \left(\frac{1}{n_p}\ \frac{df}{dz}\right)$$

La dérivée $dI/dT$, qui constitue un indicateur de la dépendance du système vis à vis de la température, peut pour sa part s'écrire:

$$\frac{dI}{dT} = \frac{d}{dT}[n_l(T)/n_p(T)]$$

$$\frac{dI}{dT} = \frac{1}{n_p}\left(\frac{dn_l}{dT} - \frac{n_l}{n_p} \cdot \frac{dn_p}{dT}\right)\left(\frac{df}{dz}\right)$$

Posons comme définition arbitraire:

$$\left[\frac{dn_l}{dT} - \frac{n_l}{n_p}\frac{dn_p}{dT}\right] = q$$

en convenant d'appeler "q" la sensibilité de la sonde relativement aux variations de température T.

Les dérivés dI/dT et dI/dn₁ étant ainsi calculées, on voit que l'erreur E telle que sus-définie peut alors s'exprimer de la manière suivante en fonction des paramètres du système:

$$E = \left[\frac{dn_l}{dT}\frac{n_l}{n_p}\frac{dn_p}{dT}\right] = q$$

On constate donc en conclusion que cette erreur E reste toujours négative pour des dispositifs à sonde unique, compte tenu de ce que les coefficients en température "dn/dT" de la plupart des liquides présentent une grandeur variant d'environ $-2\times10^{-4}$ à $-6\times10^{-4}/°C$ selon les liquides, alors que les coefficients en température "$dn_p/dT$" de pratiquement tous les matériaux solides transparents présentent des valeurs généralement beaucoup moins élevées. Cette erreur négative E s'avère ainsi maximales pour des dispositifs à sonde unique dont le matériau constitutif est du verre (présentant un coefficient en température de l'ordre de $10^{-6}/°C$, négligeable devant celui des liquides). Cette erreur négative E est susceptible d'être sensiblement réduite en prévoyant d'utiliser comme matériau constitutif des sondes des matériaux tels que certaines matières plastiques présentant les coefficients en température les plus élevés connus (de l'ordre de $-1\times10^{-4}/°C$). Une telle erreur négative peut néanmoins seulement être réduite (sans pouvoir au demeurant guère descendre au-dessous d'une valeur de l'ordre de $-1\times10^{-4}/°C$, mais non point annulée, et encore moins être rendue positive.

Le dispositif représente à la fig 1b comprend une sonde optique unique 11, se composant d'une fibre optique en forme de U comprenant une section incurvée 12 de forme semi-circulaire se prolongeant à chacune de ses extrémités par des sections droites respectives 16 et 17. La section incurvée 12 de la fibre 11, dont la coeur est fait en un matériau d'indice de réfraction "$n_p$", est immergée dans un liquide à tester 5 d'indice de réfraction "$n_l$" (les indices de réfraction respectifs "$n_p$" et "$n_l$" variant en fonction de la température de mesure "T"). En regard de l'extrémité libre de la section d'entrée 16 de la fibre 11 se trouve disposée une source lumineuse 18, chargée d'injecter une quantité de lumière prédéterminée à l'intérieur de la fibre 11. La lumière ainsi injectée en entrée de la fibre 11 est alors véhiculée jusqu'en sortie de cette dernière tout en donnant lieu, ainsi qu'il est connu, à des pertes de lumière par réfraction à la courbure qui sont fonction de l'indice de réfraction du liquide (courbure de section incurvée 12 choisie suffisamment prononcée pour que ces pertes ne soient pas négligeables), de sorte que la quantité de lumière "I" émergeant en sortie de la fibre 11 s'avère être également fonction de l'indice de réfraction de ce liquide. En regard de la sortie de la fibre 11 se trouve par ailleurs disposé un transducteur photoélectrique 19, chargé d'élaborer un signal électrique "s" directement proportionnel à cette quantité de lumière "I" émergeant de la fibre 11. Le transducteur photoélectrique 19 est enfin connecté à un organe d'affichage 20, chargé de donner directement la valeur de l'indice de réfraction "$n_{lo}$" du liquide testé 5 ramené la température de référence $T_o$. A cet effet, l'organe d'affichage est calibré directement en unités d'indices de réfraction, ce calibrage étant par ailleurs opéré comme précédemment à la température de référence $T_o$, à l'aide de liquides d'étalonnage dont on connait précisément les valeurs d'indice "$n_{lo}$" à cette température "$T_o$". Un tel calibrage ou étalonnage se trouve mieux illustré par la courbe A figurant sur le diagramme de la fig. 2b, qui montre les variations de la quantité de lumière "I" transmise par la fibre 11 en fonction de l'indice de réfraction "$n_{lo}$" des liquides d'étalonnage maintenus à la température de référence "$T_o$". On constate sur ce diagramme que la nature particulière de la sonde utilisée (à savoir fibre optique incurvée) donne lieu à une quantité de lumière transmise "I" qui varie exponentiellement en fonction de l'indice "$n_{lo}$", cette variation exponentielle I ($n_{lo}$) pouvant s'exprimer à l'aide de la relation:

$$I = f(n_{lo}) = Ce^{-kn_{lo}}$$

où "C" désigne une constante
et "k" le coefficient d'exponentiallité de la sonde relativement aux variations de l'indice de réfraction du liquide à tester.

Le dispositif sus-décrit permet de déterminer comme précédemment l'indice de réfraction "$n_{lo}$" d'un liquide inconnu ramené à la température de référence "$T_o$", cette détermination donnant également lieu, lorsque la température de mesure T diffère de la température de référence "$T_o$", à une erreur E qui peut s'exprimer comme précédemment par la relation (cf diagramme fig. 2b):

$$E = \frac{n_{lo}\,reel - n_{lo}\,aff}{\Delta T} = \frac{dI/dT}{dI/dn_{lo}}$$

La quantité de lumière "I" transmise par la sonde optique 11 est par ailleurs comme précédemment toujours fonction de l'indice de réfraction "$n_p$" de la sonde et de l'indice de réfraction "$n_l$" du liquide, selon la relation:

$$I = f[n_l(T)/n_p(T)]$$

de sorte que la dérivée dI/dT peut toujours s'écrire:

$$\frac{dl}{dT} = \frac{dl}{dn_p} \left[ \frac{dn_l}{dT} - \frac{n_l}{n_p} \frac{dn_p}{dT} \right]$$

L'expression de l'erreur E en fonction des paramètres du système s'avère donc en conclusion être strictement identique à celle donnée précédemment, à savoir:

$$E = \left[ \frac{dn_l}{dT} \frac{n_l}{n_p} \frac{dn_p}{dT} \right] = q$$

laquelle erreur E reste donc toujours négative.

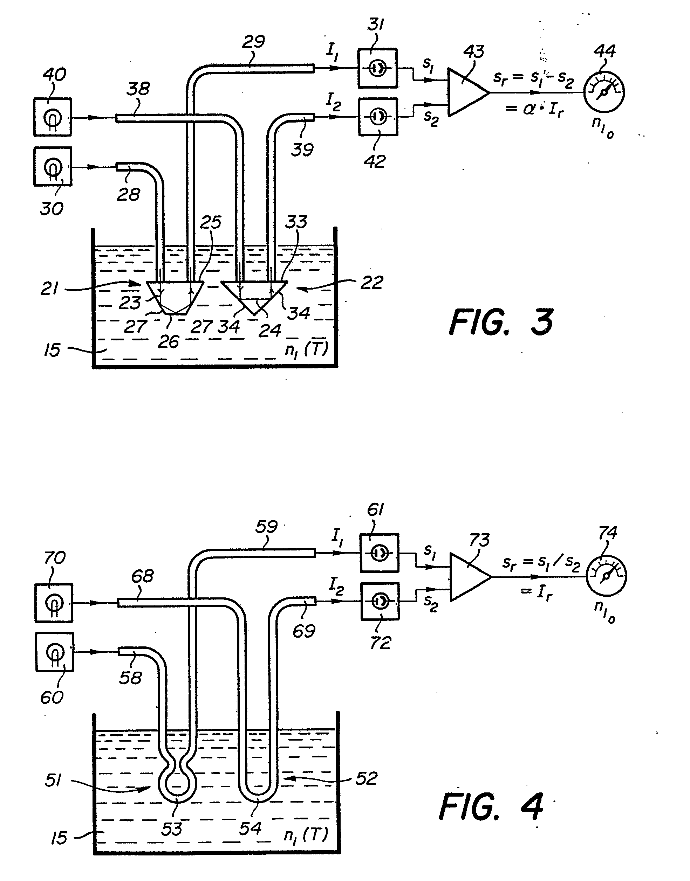

La fig 3 illustre une première forme d'exécution du dispositif à double sonde optique selon l'invention, suivant laquelle il est fait usage de sondes optiques à caractéristique I ($n_l$) linéaire.

Le dispositif représenté sur cette fig 3 comprend deux sondes optiques 21 et 22, se composant de prismes respectifs 23 et 24 faits en des matériaux transparents d'indice de réfraction respectifs "$n_{p1}$" et "$n_{p2}$", lesdits prismes 23 et 24 se trouvant par ailleurs immergés dans un liquide à tester 15 d'indice de réfraction "$n_l$".

Le prisme 23 de la première sonde optique 21 comporte une base 25 plus grande qu'une face opposée parallèle 26, ainsi que deux autres faces 27 inclinées d'un même angle par rapport à la base 25. La première sonde optique 21 comprend encore deux conducteurs de lumière 28 et 29 raccordés rigidement par l'une de leurs extrémités à la base 25 du prisme 23, qui sont destinés à servir respectivement de section d'entrée et de section de sortie pour la sonde 21. En regard de l'extrémité libre de la section d'entrée 28 de la sonde 21 se trouve disposée une première source lumineuse 30, chargée d'injecter une quantité de lumière prédéterminée à l'intérieur de la sonde 21, cependant qu'en regard de la section de sortie 29 se trouve disposé un premier transducteur photoélectrique 31 chargé d'élaborer un signal électrique "$s_1$" directement proportionnel à la quantité de lumière "$I_1$" transmise jusqu'en sortie de cette première sonde 21 (lumière transmise jusqu'en sortie de la sonde 21 après avoir subi trois réflexions successives sur les faces correspondantes 26 et 27 du prisme 23).

Le prisme 24 de la seconde sonde optique 22 comporte quant à lui une base 33, ainsi que deux autres faces 34 inclinées d'un même angle par rapport à cette base 33. La seconde sonde optique 22 comprend encore deux conducteurs de lumière 38 et 39 raccordés rigidement par l'une de leurs extrémités à la base 33 du prisme 24, qui sont destinés à servir respectivement de section d'entrée et de section de sortie pour la sonde 29. En regard de l'extrémité libre de la section d'entrée 38 de la sortie 27 se trouve disposée une seconde source lumineuse 40, chargée d'injectée une quantité de lumière prédéterminée à l'intérieur de la sonde 22, cependant qu'en regard de la section de sortie 39 se trouve disposé un second transducteur photoélectrique 42, chargé d'élaborer un signal électrique "$s_2$" directement proportionnel à la quantité de lumière "$I_2$" transmise jusqu'en sortie de cette seconde sonde 22 (lumière transmise jusqu'en sortie de la sonde 22 après avoir subi deux réflexions successives sur les faces correspondantes 34 du prisme 24).

L'agencement géométrique particulier de chacun des prismes 23 et 24 tels que sus-décrits (prisme 23 comportant trois surfaces réfléchissantes, cependant que le prisme 22 en comporte seulement deux) a été précisément choisi de façon à donner lieu, pour des raisons qui seraient expliquées ci-après, à une sensibilité "$m_1$" pour la première sonde 21 ("$m_1$" étant tel que $m_1 = dl_1 / dn_l$) qui soit plus élevée que la sensibilite "$m_2$" relative à la seconde sonde 22 ("$m_2$" étant tel que $m_2 = dl_2/I_2/dn_l$).

Les sorties des transducteurs photoélectriques 31 et 42 associés aux sondes respectives 21 et 22 sont par ailleurs connectées aux deux entrées d'un organe soustracteur 43, chargé d'élaborer un signal électrique résultant "$s_r$" correspondant à la différence des signaux "$s_1$" et "$s_2$". Compte tenu du coefficient de proportionnalité "$a$" entre les signaux respectifs "$s_1$" et "$s_2$" et les valeurs respectives "$I_1$" et "$I_2$", le signal résultant "$s_r$" peut alors s'inscrire indifféremment:

$$s_r = (s_1 - s_2)$$
$$= a(I_1 - I_2)$$

ou encore $s_r = aI_r$

en convenant de désigner par $I_r$ la différence entre les quantités $I_1$ et $I_2$.

La sortie de l'organe soustracteur 43 est enfin connectée à un organe d'affichage 44, chargé d'afficher directement la valeur de l'indice de réfraction "$n_{lo}$" du fluide testé 15 ramené à la température de référence prédéderminée "$T_o$". A cet effet, l'organe d'affichage 44 est calibré directement en unités d'indice de réfraction, ce calibrage étant opéré (comme pour les dispositifs à sonde unique) à la température de référence $T_o$, à l'aide de liquide d'étalonnage dont on connait précisément les valeurs d'indice "$n_{lo}$" à cette température "$T_o$" (la grandeur "$s_r$" ou "$dl_r$" étant en effet représentative de l'indice "$n_{lo}$" à la température de référence "$T_o$", puisque les grandeurs composante "$s_1$" et "$s_2$" sont déjà représentatives de cet indice "$n_{lo}$" à la température "$T_o$", ainsi que vu précédemment).

Le dispositif sus-décrit étant ainsi calibré, son mode de fonctionnement est alors le suivant: les prismes 23 et 24 des sondes respectives 21 et 22 étant immergés dans le liquide dont on veut déterminer l'indice de réfraction "$n_{lo}$" ramené à la température de référence "$T_o$", l'injection d'une quantité de lumière prédéterminée en entrée des sondes 21 et 22 donne alors lieu à des quantités de lumière respectives "$I_1$" et "$I_2$" en sortie de ces sondes, qui entrainent après élaboration du signal résultant "$aI_r$", l'affichage d'une valeur "$n_{lo}$ aff" sur l'organe d'affichage 44. Cette valeur affichée "$n_{lo}$ aff" correspond bien à la valeur réelle "$n_{lo}$ reel" recherchée, dans le cas où la température T du système se trouve être égale à la température de référence $T_o$. Cette valeur "$n_{lo}$ aff" est par contre susceptible de n'être plus égale à la valeur "$n_{lo}$ reel" recherchée, dans le cas où la température $T$ du système vient à différer de la température de référence $T_o$, l'erreur $E$ ainsi susceptible d'être effectuée sur la détermination de l'indice "$n_{lo}$" ramené à $T_o$ étant alors donnée (de manière analogue à ce qui a été montré plus haut) par la relation:

$$E=\left[\frac{n_{lo}\,reel-n_{lo}\,aff}{\Delta T}\right]=\frac{dl_r/dT}{dl_r/dn_{lo}}$$

Calculons maintenant les dérivées respectives $dl_r/dT$ et $dl_r/dn_{lo}$, afin de déterminer la valeur de l'erreur $E$ en fonction des paramètres du système.

Ainsi que montré précédemment, les quantités de lumière "$l_1$" et "$l_2$" transmises par les sondes respectives 21 et 22 peuvent s'exprimer à l'aide des relations suivantes:

$$l_1=C_1-(m_1n_{lo})+\frac{dl_1}{dT}\Delta T$$

$$=C_1-(m_1n_{lo})+m_1q_1\Delta T$$

et

$$l_2=C_2-(m_2n_{lo})+\frac{dl_2}{dT}\Delta T$$

$$=C_2-(m_2n_{lo})-m_2q_2\Delta T$$

où

"$C_1$" et "$C_2$" désignent des constantes,
"$m_1$" et "$m_2$" les sensibilités respectives "$dl_1/dn_{lo}$"
et
"$dl_2/dn_{lo}$" des sondes 21 et 22 relativement aux variations de l'indice du liquide à tester, et,
"$q_1$" et "$q_2$" les sensibilités apparentes respectives
des sondes 21 et 22 relativement aux variations de température du système avec:

$$q_1=\left[\frac{dn_l}{dT}-\frac{n_l}{n_{p1}}\frac{dn_{pn}}{dT}\right]$$

et

$$q_2=\left[\frac{dn_l}{dT}-\frac{n_l}{n_{p2}}\frac{dn_{p2}}{dT}\right]$$

La valeur résultante $l_r$ peut donc s'écrire:

$$l_r=(l_1-l_2)$$
$$=(C_1-C_2)-(m_1-m_2)n_{lo}-(m_1q_1-m_2q_2)\Delta T$$

d'où il en résulte les dérivées respectives:

$$\frac{dl_r}{dT}=-(m_1q_1-m_2q_2)$$

et

$$\frac{dl_r}{dn_{lo}}=-(m_1-m_2)$$

ce qui conduit alors à la relation suivante pour l'erreur $E$:

$$E=\frac{dl_r/dT}{dl/dn_{lo}}=\frac{m_1q_1-m_2q_2}{m_1-m_2}$$

La condition pour que cette erreur $E$ soit rendue plus positive que l'erreur négative "$q_1$" ou "$q_2$" qui résulterait inévitablement de l'utilisation de la seule sonde 21 ou de la seule sonde 22 est donc que:

$$\frac{m_1q_1-m_2q_2}{m_1-m_2}<q_1\ ou\ q_2$$

Compte tenu de ce que les sondes respectives 21 et 22 ont été choisies quant à leur agencement géométrique de façon que "$m_1$" soit supérieur à "$m_2$", la condition sus-énoncée se trouve ainsi remplie lorsque "$q_1$" est choisi inférieur à "$q_2$". Cette condition "$q_1$"<"$q_2$" implique, quant aux matériaux constitutifs des prismes 23 et 24 des sondes respectives 21 et 22, le simple choix pour le prisme de la première sonde 21 d'un matériau transparent d'indice "$n_{p1}$" dont le coefficient en température "$dn_{p1}/dT$" se trouve être supérieur au coefficient en température "$dn_{p2}/dT$" du matériau transparent d'indice "$n_{p2}$" choisi pour le prisme de la seconde sonde 24. Une telle condition $q_1<q_2$ peut ainsi à titre d'exemple être aisément remplie en choisissant, respectivement, un matériau tel que du polystyrène

$$(dn_{p1}/dT=1\times10^{-4}/°C)$$

comme matériau constitutif du prisme 23 de la première sonde 21, et un matériau tel que du verre

$$(dn_{p2}/dt=-1\times10^{-6}/°C)$$

pour le prisme 24 de la seconde sonde 22.

En résumé, on constate donc que le dispositif à double sonde optique tel que sus-décrit permet d'assurer la détermination de l'indice de réfraction "$n_{lo}$" d'un liquide ramené à la température de référence $T_o$, selon une erreur $E$ qui s'avère être plus positive que l'erreur négative inhérente à l'utilisation d'un dispositif à sonde unique, dès que les conditions suivantes sont remplies:

$$m_1>m_2$$

et

$$q_1<q_2\ (ou\ dn_{p1}/dT>dn_{p2}/dT)$$

Cette erreur $E$ peut au demeurant être pratiquement annulée en choisissant les paramètres respectifs $m_1$, $m_2$, $q_1$ et $q_2$ façon qu'ils obeissent à la relation:

$$m_1 q_1 = m_2 q_2,$$

ce qui permet alors d'obtenir un dispositif de mesure qui s'avère être quasi parfaitement compensé en température.

Cette erreur E peut en outre, dans certains cas désirés, être rendue positive par un choix approprié des paramètres respectifs $m_1$, $m_2$, $q_1$ et $q_2$, ce qui permet alors d'obtenir un dispositif surcompensé en température (ce qui est impossible avec les dispositifs à sonde unique). Une telle possibilité de surcompensation en température peut s'avérer particulièrement avantageuse dans un certain nombre d'applications, telle que par exemple celle visant à déterminer l'état de charge Q d'un accumulateur acide-plomb par le biais de la mesure de l'indice de réfraction "$n_{lo}$" de son électrolyte ramené à la température de référence $T_o$ (une telle surcompensation permettant ainsi à titre d'exemple d'indiquer au conducteur d'un véhicule, par temps froid, une charge "Q aff" sensiblement plus faible que la charge réelle "Q reel" de sa batterie, de façon à augmenter la sécurité d'utilisation).

La fig. 4 illustre une seconde forme d'exécution du dispositif à double sonde optique selon l'invention, suivant laquelle il est fait usage de sondes optiques à caractéristique I $(n_l)$ exponentielle.

Le dispositif représenté sur cette fig. 4 comprend deux sondes optiques 51 et 52, constituées par des fibres optiques incurvées dont le coeur est fait les matériaux transparents d'indice de réfraction respectif "$n_{p1}$" et "$n_{p2}$", les sections incurvées 53 et 54 de ces fibres optiques 51 et 52 se trouvant par ailleurs immergées dans le liquide à tester 15 d'indice de réfraction "$n_l$".

La section incurvée 53 de la première fibre 51 présente un profil en forme de "Ω renversé" comprenant trois courbures alternées. Cette section incurvée 53 se prolonge à chacune de ses extrémités par des sections droites respectives 58 et 59, qui sont destinées à servir respectivement de section d'entrée et de section de sortie pour la sonde 51. En regard de l'extrémité libre de la section d'entrée 58 de la sonde 51 se trouve disposée une première source lumineuse 60, chargée d'injecter une quantité de lumière prédéterminée à l'intérieur de la sonde 51, cependant qu'en regard de la section de sortie 59 se trouve disposé un premier transducteur photoélectrique 61, chargé d'élaborer un signal électrique "$s_1$" directement proportionnel à la quantité de lumière "$l_1$" transmise jusqu'en sortie de cette première sonde 61 (lumière transmise jusqu'en sortie de la sonde 51 après avoir subi des pertes par réfraction sur les trois courbures sucessives inverses de la section incurvée 53).

La section incurvée 54 de la seconde fibre 52 présente quant à elle un profil à courbure unique en forme de U. Cette section incurvée 54 se prolonge à chacune de ses extrémités par des sections droites respectives 68 et 69, qui sont destinées à servir de section d'entrée et de section de sortie pour la sonde 52. En regard de l'extrémité libre de la section d'entrée 68 de la sonde 52 se trouve disposée une seconde source lumineuse 70, chargée d'injecter une quantité de lumière prédéterminée à l'intérieur de la section 52, cependant qu'en regard de la section de sortie 69 se trouve disposé un second transducteur photoélectrique 72, chargé d'élaborer un signal électrique "$s_2$" directement proportionnel à la quantité de lumière "$l_2$" transmise jusqu'en sortie de cette seconde sonde 52 (lumière transmise jusqu'en sortie de sonde 52 après avoir subi des pertes par réfraction durant son passage au travers de la courbure unique 54).

L'agencement géomètrique particulier des sections incurvées respectives 53 et 54 telles que sus-décrites (section 53 comportant trois courbures inverses, cependant que la section 54 en comporte une seule) a été précisément choisi de façon à donner lieu, pour des raisons que seront expliquées ci-après, à un coefficient d'exponentialité "$k_1$" pour la première sonde 51 qui sont supérieur au coefficient d'exponentialité "$k_2$" relatif à la seconde sonde 52.

Les sorties des transducteurs photoélectriques 61 et 72 associés aux sondes respectives 51 et 52 sont par ailleurs connectées aux deux entrées d'un organe diviseur 73, charger d'élaborer un signal électrique résultant "$s_r$" correspondant au quotient des signaux "$s_1$" et "$s_2$". Compte tenu du coefficient de proportionalité "$\alpha$" entre les signaux respectifs "$s_1$" et "$s_2$" et les valeurs respectives "$l_1$" et "$l_2$", le signal résultant "$s_r$" peut alors s'écrir indifféremment:

$$s_r = s_1 / s_2$$
$$= l_1 / l_2 = l_r$$

en convenant de désigner par $l_r$ le quotient $l_1 / l_2$.

La sortie de l'organe diviseur 73 est enfin connectée à un organe d'affichage 74, chargé d'afficher directement la valeur de l'indice de réfraction "$n_{lo}$" du fluide testé 15 ramené à la température de référence predéterminée "$T_o$". A cet effet, l'organe d'affichage 74 est calibré directement en unités d'indices de réfraction, ce calibrage étant opéré (comme pour les dispositifs à sonde unique) à la température de référence $T_o$, à l'aide de liquides d'étalonnage dont on connait précisément les valeurs d'indice "$n_{lo}$" à cette température "$T_o$" (la grandeur "$s_r$" ou "$l_r$" étant en effet représentative de l'indice "$n_{lo}$" à la température de référence "$T_o$", puisque les grandeurs composantes "$s_1$" et "$s_2$" sont déjà représentatives de cet indice "$n_{lo}$" à la température "$T_o$", ainsi que vu précédement).

Le dispositif sus-décrit étant calibré, son mode de fonctionnement est alors le suivant: les sections incurvées 53 et 54 des sondes respectives 51 et 52 étant immergées dans le liquide dont on veut déterminer l'indice de réfraction "$n_{lo}$" ramené à la température de référence "$T_o$", l'injection d'une quantité de lumière prédéterminée en entrée des sondes 51 et 52 donne alors lieu à des quantités de lumières

respectives "$I_1$" et "$I_2$" en sortie des sondes, qui entrainent, après élaboration du signal résultant "$I_r$", l'affichage d'une valeur "$n_{Io}$ aff" sur l'organe d'affichage 74. Cette valeur affichée "$n_{Io}$ aff" correspond bien à la valeur réelle "$n_{Io}$ reel" recherchée, dans le cas où la température T du système se trouve être égale à la température de référence $T_o$. Cette valeur "$n_{Io}$ aff" est par contre susceptible de n'être plus égale à la valeur "$n_{Io}$ reel" recherchée, dans le cas où la température T du système vient à différer de la température de référence $T_o$, l'erreur E ainsi susceptible d'être affectée sur la détermination de l'indice "$n_{Io}$" ramené à $T_o$ étant alors donnée (de manière analogue à ce qui a été montré plus haut) par la relation:

$$E=\frac{n_{Io}\ reel-n_{Io}\ aff}{\Delta T}=(dI_r/dT)/(dI_r/d_{n_{Io}})$$

Calculons maintenant les dérivées respectives $dI_r/dT$ et $dI_r/dn_{Io}$, afin de déterminer la valeur de l'erreur E en fonction des paramètres du système.

Ainsi que montré précédemment, les quantités de lumière "$I_1$" et "$I_2$" transmises par les sondes respectives 51 et 52 peuvent s'exprimer à l'aide des relations suivantes:

$$I_1=C_1e^{-k_1n_I}+\frac{dI_1}{dT}\Delta T$$

et

$$I_2=C_2e^{-k_2n_I}\frac{dI_2}{dT}\Delta T$$

ou encore, compte tenu de ce que $dI/dT=q_1dI/dn_{Io}$, avec $dI/dn_{Io}=-kI$ (pour les sondes à caractéristique exponentielle):

$$I_1=C_1e^{-k_1n_I}[1-k_1q_1\Delta T]$$

et

$$I_2=C_2e^{-k_2n_I}[1-k_2q_2\Delta T]$$

où "$C_1$" et "$C_2$" désignent des constantes,
"$k_1$" et "$k_2$" les coefficients d'exponentialité respectifs des sondes 51 et 52 relativement aux variations de l'indice du liquide à tester, et,
"$q_1$" et "$q_2$" les sensibilités apparentes respectives des sondes 51 et 52 relativement aux variations de température du système avec:

$$q_1=\left[\frac{dn_I}{dT}-\frac{n_I}{n_{p1}}\frac{dn_{p1}}{dT}\right]$$

et

$$q_2=\left[\frac{dn_I}{dT}-\frac{n_I}{n_{p2}}\frac{dn_{p2}}{dT}\right]$$

La valeur résultant $I_r$ peut donc s'écrire:

$$I_r=I_1/I_2$$

$$=\frac{C_1}{C_2}e^{-(k_1-k_2)n_I}\left[\frac{1-k_1q_1\Delta T}{1-k_2q_2\Delta T}\right]$$

soit enore

$$I_r=\frac{C_1}{C_2}e^{-(k_1-k_2)n_I}[1-(k_1q_1-k_2q_2\Delta T]$$

en supposant que les quantités $k_1q_1\Delta T$ et $k_2q_2\Delta T$ restent des infiniments petits par rapport à l'unité (ce qui est vérifié dans la pratique).

Il en résulte alors les dérivées respectives:

$$\frac{dI_r}{dT}=-(k_1q_1-k_2q_2)I_r$$

et

$$\frac{dI_r}{dn_{Io}}=-(k_1-k_2)I_r$$

ce que conduit alors à la relation suivante pour l'erreur E:

$$E=\frac{dI_r/T}{dI_r/dn_{Io}}=\frac{k_1q_1-k_2q_2}{k_1-k_2}$$

La condition pour que cette erreur E soit rendue plus positive que l'erreur négative "$q_1$" ou "$q_2$" qui résulterait inévitablement de l'utilisation de la seule sonde 51 ou de la seule sonde 52 est donc que:

$$\frac{k_1q_1-k_2q_2}{k_1-k_2}<q_1\ ou\ q_2$$

Compte tenu de ce que les sondes respectives 51 et 52 ont été choisies quant à leur aménagement géométrique de façon que "$k_1$" soit supérieur à "$k_2$", la condition sus-énoncée se trouve ainsi remplie lorsque "$q_1$" est chois inférieur à "$q_2$". Cette condition "$q_1$"<"$q_2$" implique, quant aux matériaux constitutifs des coeurs des fibres respectives 51 et 52, le simple choix pour le coeur de la première fibre 51 d'un matériau transparent d'indice "$n_{p1}$" dont le coefficient en température "$dn_{p1}/dT$" se trouve être supérieur au coefficient en température "$dn_{p2}/dT$" du matériau transparent d'indice "$n_{p2}$" choisi pour le coeur 33 de la seconde fibre 54. Une telle condition $q_1<q_2$ peut ainsi à titre d'exemple être aisément remplie en choisissant, respectivement, un matériau tel que du polystyrène

$$(dn_{p1}/dT=-1\times10^{-4}/°C)$$

comme matériau constitutif du coeur de la première sonde 51, et un matériau tel que de verre

$$(dn_{p2}/dT - 1 \times 10^{-6}/°C)$$

pour le coeur de la seconde sonde 52.

En résumé, on constate donc que le dispositif à double sonde optique tel que sus-décrit permet d'assurer la détermination de l'indice de réfraction $n_{lo}$ d'un liquide ramené à la température de référence $T_o$, selon une erreur qui s'avère être plus positive que l'erreur négative inhérente à l'utilisation d'un dispositif à sonde unique, dès que les conditions suivantes sont remplies'

$$-k_1 > k_2$$

et

$$q_1 < q_2 \text{ (ou } d\dot{n}_{p1}/dT > dn_{p2}/dT$$

Cette erreur E peut au demeurant être pratiquement annulée en choisissant les paramètres respectifs $k_1$, $k_2$, $q_1$, $q_2$ de façon qu'ils obéissent à la relation:

$$k_1 q_1 \overset{\triangle}{=} k_2 q_2,$$

ce qui permet alors d'obtenir un dispositif de mesure qui s'avère être quasi-parfaitement compensé en température.

Cette erreur E peut en outre, dans certains cas désirés, être rendue positive par un choix approprié des paramètres respectifs $k_1$, $k_2$, $q_1$ et $q_2$, ce qui permet alors d'obtenir un dispositif surcompensé en température (ce qui est impossible avec les dispositifs à sonde unique).

Avec un dispositif du genre représenté à la fig. 4 et dans lequel la sonde optique 51 était en polystyrène (indice de réfraction (n=1,6) et la sonde optique 52 était en verre (n=1,47) il a été procédé à un test comparatif dont le résultat à été le suivant:

a) pour chaque sonde considérée séparément la sensibilité en température était

$$\text{---pour la sonde 51} \frac{dn}{dT} = -1,55.10^{-4}/°C$$

$$\text{---pour la sonde 52} \frac{dn}{dT} = -2,74.10^{-4}/°C$$

b) en faisant emploi du dispositif complet tel qu'illustré sur la fig. 4, la sensibilité en température est devenu égale à

$$\frac{\cdot dn}{dT} = -0,073.10^{-6}/°C$$

valeur très inférieure à celles mentionnées ci-dessus, ce qui confirme la capacité de compensation en température du dispositif selon la fig. 4.

## Revendications

1. Dispositif à sonde optique pour déterminer l'indice de réfraction d'un fluide, comprenant:

— une première sonde optique (21), du type constitué par un corps conducteur de la lumière se composant d'une section d'entrée (28) et d'une section de sortie (29) raccordées l'une à l'autre par une section intermédiaire (23), au moins ladite section intermédiaire de ladite sonde étant destinée à être immergée dans ledit fluide, et cette section intermédiaire étant adaptée pour véhiculer de la lumière entre ladite section d'entrée et ladite section de sortie en donnant lieu à une quantité de lumière émergeant de ladite section de sortie de ladite sonde qui varie linéairement en fonction de l'indice de réfraction dudit fluide,

— et une source de lumière (30) associée à ladite section d'entrée (28) de ladite première sonde (21) pour injecter une quantité de lumière prédéterminée dans la section d'entrée,

ledit dispositif étant caractérisé par le fait que, pour déterminer l'indice de réfraction d'un fluide, ramené à une température de référence prédéterminée et pour compenser ou surcompenser les erreurs entachant le signal élaboré par un dispositif à sonde optique unique et dues à la variation de l'indice de réfraction du fluide avec la température, il comprend une seconde sonde optique (22, 24, 38, 39, 40, 42) du même type que la première sonde optique et des moyens (43) pour élaborer un signal correspondant à la différence des quantités de lumière emergeant respectivement des sections de sortie des première et seconde sondes optiques, lesdites sections intermédiaires (23, 24) desdites première et seconde sondes étant choisies, d'une part en ce qui concerne leur forme géométrique, de façon à présenter des sensibilités respectives "$m_1$" et "$m_2$" relativement aux variations des l'indice de réfraction du fluide qui sont telles que "$m_1$" est supérieur à "$m_2$", et d'autre part en ce qui concerne leur matériau constitutif, de façon à présenter des sensibilités apparentes respectives "$q_1$" et "$q_2$" relativement aux variations de température de ce fluide qui sont telles que "$q_1$" est inférieur à "$q_2$", de sorte que ledit signal résultant élaboré par lesdits moyens (43) constitue un signal représentatif dudit indice de réfraction du fluide ramené à ladite température de référence.

2. Dispositif selon la revendication 1, caractérisé par le fait que chacun desdites sections intermédiaires (23, 24) est constituée par un prisme comprenant au moins deux surfaces (26, 27, 34) réfléchissantes, agencées de façon à réfléchir successivement au moins une partie de la lumière provenant de ladite section d'entrée (28, 38) jusqu'à ladite section de sortie (29, 39) de chacun desdits corps.

3. Dispositif selon la revendication 1, destiné à permettre une compensation sensiblement parfaite en température, caractérisé par le fait que la forme géométrique ainsi que le matériau constitutif de chacune desdites sections inter-médiaires (23, 24) desdites sondes sont choisis de façon à présenter, respectivement, des sensibilités effectives respectives "$m_1$" et "$m_2$" relativement aux variations de l'indice de réfraction du fluide, ainsi que des sensibilités apparentes respectives "$q_1$" et "$q_2$" relativement aux variations de température de ce fluide, qui obéissent sensiblement à la relation: $m_1q_1=m_2q_2$.

4. Dispositif à seconde optique pour déterminer l'indice de réfraction d'un fluide comprenant:

— une première sonde optique (51) du type constitué par un corps conducteur de la lumière se composant d'une section d'entrée (58) et d'une section de sortie (59) raccordées l'une à l'autre par une section intermédiaire (53, 54) au moins ladite section intermédiaire de ladite sonde étant destinée à être immergée dans ledit fluide, et cette section intermédiaire étant adaptée pour véhiculer de la lumière entre ladite section d'entrée et ladite section de sortie en donnant lieu à une quantité de lumière émergeant de ladite section de sortie de ladite sonde qui varie exponentiellement en fonction de l'indice de réfraction dudit fluide,

— et une source de lumière (60) associée à ladite section d'entrée (58) de ladite première sonde (51) pour injecter une quantité de lumière prédéterminée dans la section d'entrée,

ledit dispositif étant caractérisé par le fait que pour déterminer l'indice de réfraction d'un fluide ramené à une température de référence prédéterminée et pour compenser ou surcompenser les erreurs entachant le signal élaboré par un dispositif à sonde optique unique et dues à la variation de l'indice de réfraction du fluide avec la température, il comprend une seconde sonde optique (52, 54, 68, 69, 70, 72) du même type que la première sonde optique et des moyens (73) pour élaborer un signal correspondant au quotient des quantités de lumière emergeant respectivement des sections de sortie des première et seconde sondes optiques, lesdites sections intermédiaires (52, 54) desdites première et seconde sondés étant choisies, d'une part en ce qui concerne leur forme géométrique, de façon à présenter des coefficients respectifs "$k_1$" et "$k_2$", qui sont des facteurs dans les exposants de fonctions exponentielles reliant les quantités de lumière emergeant des sections de sortie des première et seconde sondes optiques, respectivement, à l'indice de réfraction du fluide et qui sont tels que "$k_1$" est supérieur à "$k_2$", et d'autre part en ce qui concerne leur matériau constitutif, de façon à présenter des sensibilités apparentes respectives "$q_1$" et "$q_2$" relativement aux variations de température de ce fluide qui sont telles que "$q_1$" est inférieur à "$q_2$", de sorte que ledit signal résultant élaboré par lesdits moyens (73) constitue un signal représentatif dudit indice de réfraction du fluide ramené à ladite température de référence.

5. Dispositif selon la revendication 4, caractérisé par le fait que chacune desdites sections intermédiaires (53, 54) est constituée par une section longiligne incurvée dont la courbure est suffisamment prononcée pour donner lieu à un passage de lumière par réfraction dans le fluide non négligeable, lesdites sections d'entrée (58, 68) et de sortie (59, 69) auxquelles se trouve raccordée chacune de ces sections intermédiaires étant également longilignes.

6. Dispositif selon la revendication 4, destiné à permettre une compensation sensiblement parfaite en température, caractérisé par le fait que la forme géométrique ainsi que le matériau constitutif desdites section intermédiaires (53, 54) incurvées sont choisis de façon à présenter, respectivement, des coefficients d'exponentialité respectifs "$k_1$" et "$k_2$" relativement aux variations de l'indice de réfraction du fluide, ainsi que des sensibilités apparentes respectives "$q_1$" et "$q_2$" relatiment aux variations de température de ce fluide, qui obéissent sensiblement à la relation:

$$k_1q_1=k_2q_2.$$

**Patentansprüche**

1. Einrichtung mit einer optischen Sonde zur Bestimmung des Brechungsindex eines Mediums, die folgendes umfaßt:

— eine erste optische Sonde (21), die durch einen lichtleitenden Körper gebildet wird, der sich aus einem Eintrittsabschnitt (28) und einem Austrittsabschnitt (29) zusammensetzt, die mitteinander über einen Zwischenabschnitt (23) verbunden sind, wobei wenigstens der Zwischenabschnitt dieser Sonde dazu bestimmt ist, in dieses Medium eingetaucht zu werden, und wobei dieser Zwischenabschnitt geeignet ist, das Licht zwischen dem Eintrittsabschnitt und dem Austrittsabschnitt zu führen, aus welchem Austrittsabschnitt der Sonde eine Lichtmenge austritt, die sich linear in Funktion des Brechungsindex des Mediums ändert,

— und eine Lichtquelle (30), die dem Eintrittsabschnitt (28) der ersten Sonde (21) zugeordnet ist, um eine vorbestimmte Lichtmenge in den Eintrittsabschnitt einzubringen,

dadurch gekennzeichnet, daß zum Bestimmen des Brechungsindex eines Mediums, der einer vorbestimmten Bezugstemperatur zugeordnet ist, und zum Ausgleich oder Überausgleich der Fehler, die dem durch eine Einrichtung mit einer einzigen optischen Sonde gebildeten Signal anhaften und die durch die Änderung des Brechungsindex des Mediums mit der Temperatur bedingt sind, die Einrichtung eine zweite optische Sunde (22, 24, 38, 39, 40, 42) der gleichen Art wie die erste optische Sonde und Vorrichtungen (43) zur Bildung eines Signales besitzt, das der Differenz der Lichtmengen entspricht, die aus dem Austrittsabschnitt der ersten bzw. zweiten Sonde austreten, wobei die Zwischenabschnitt (23, 24) der ersten und zweiten Sonde so gewählt sind, einerseits was ihre geometrische Form betrifft, daß sie Empfindlichkeiten "$m_1$" bzw. "$m_2$" relativ zu den Änderungen des Brechungsindex des Mediums haben, so daß "$m_1$" größer "$m_2$" ist, und andererseits was ihr Herstellungsmaterial betrifft, daß die scheinbaren Empfindlichkeiten "$q_1$" bzw. "$q_2$" relativ zu den Änderungen der Temperaturen dieses Mediums so sind, daß "$q_1$" kleiner ist als "$q_2$", so daß das sich ergebende, mit Hilfe dieser Vorrichtungen (43) gebildete Signal ein Signal bildet, das für den Brechungsindex der Flüssigkeit, die der Bezugstemperatur zugeordnet ist, repräsentativ ist.

2. Einrichtung nach Anspruch 1, dadurch gekennzeichnet, daß jeder dieser Zwischenabschnitt (23, 24) durch ein Prisma gebildet ist, das wenigstens zwei reflektierende Flächen (26, 27, 34) umfaßt, die so ausgebildet sind, daß sie nacheinander wenigstens einen Teil des Lichtes, das vom Eintrittsabschnitt (28, 38) bis zum Austrittsabschnitt (29, 39) jeder der Körper herrührt, reflektieren.

3. Einrichtung nach Anspruch 1, die eine im wesentlichen vollständige Kompensation hinsichtlich der Temperatur gestattet, dadurch gekennzeichnet, daß die geometrische Form sowi der Herstellungsmaterial jedes dieser Zwischenabschnitt (23, 24) der Sonden derart gewählt sind, daß die jeweiligen effektiven Empfindlichkeiten "$m_1$" und "$m_2$" relativ zu den Änderungen des Brechungsindex des Mediums sowie die scheinbaren Empfindlichkeiten "$q_1$" und "$q_2$" relativ zu den Änderungen der Temperatur dieses Mediums im wesentlichen der Beziehung $m_1 \cdot q_1 = m_2 \cdot q_1$ gehorchen.

4. Einrichtung mit einer optischen Sonde zur Bestimmung des Brechungsindex eines Mediums, die folgendes umfaßt:

— eine erste optische Sonde (51) die durch einen lichtleitenden Körper gebildet wird, der sich aus einem Eintrittsabschnitt (58) und einem Austrittsabschnitt (59) zusammensetzt, die miteinander über einen Zwischenabschnitt (53, 54) verbunden sind, wobei wenigstens der Zwischenabschnitt dieser Sonde dazu bestimmt ist, in dieses Medium eingetaucht zu werden, und wobei dieser Zwischenabschnitt geeignet ist, das Licht zwischen dem Eintrittsabschnitt und dem Austrittsabschnitt zu führen, aus welchem Austrittsabschnitt der Sonde eine Lichtmenge austritt, die sich exponentiell in Funktion des Brechungsindex des Mediums ändert,

— und eine Lichtquelle (60), die dem Eintrittsabschnitt (58) der ersten Sonde (51) zugeordnet ist, um eine vorbestimmte Lichtmenge · in · den · Eintrittsabschnitt einzubringen,

dadurch gekennzeichnet, daß zum Bestimmen des Brechungsindex eines Mediums, der einer vorbestimmten Bezugstemperatur zugeordnet ist, und zum Kompensieren oder Überkompensieren der Fehler, die dem durch eine Einrichtung mit einer einzigen optischen Sonde gebildeten Signal anhaften und durch die Änderung des Brechungsindex des Mediums mit der Temperatur bedingt sind, die Einrichtung eine zweite optische Sonde (52, 54, 68, 69, 70, 72) des gleichen Typs wie die erste optische Sonde und Vorrichtung (73) zur Bildung eines Signals umfaßt, das dem Quotienten der Lichtmengen, die aus den Austrittsabschnitten der ersten bzw. zweiten optischen Sonde austreten, entspricht, wobei die Zwischenabschnitte (52, 54) der ersten bzw. zweiten Sonde so gewählt sind, daß einerseits, was die geometrische Form betrifft, die jeweiligen Koeffizienten "$k_1$" und "$k_2$", die Faktoren in den Exponenten der Exponentialfunktionen sind, die die aus den Austrittsabschnitten der ersten bzw. zweiten optischen Sonde austretenden Lichtmengen mit dem Brechungsindex des Mediums verbinden, so sind, daß "$k_1$" größer als "$k_2$" ist, und andererseits hinsichtlich des Herstellungsmaterials derart sind, daß die scheinbaren Sensibilitäten "$q_1$" und "$q_2$" relativ zu den Änderungen der Temperatur des Mediums so sind, daß "$q_1$" kleiner als "$q_2$" ist, so daß das sich durch diese Vorrichtung (73) ergebende, resultierende Signal ein Signal ergibt, das für den Brechungsindex der Flüssigkeit bei der zugeordneten Bezugstemperatur repräsentativ ist.

5. Einrichtung nach Anspruch 4, dadurch gekennzeichnet, daß jeder Zwischenabschnitt (53, 54) durch einen länglichen, gekrümmten Abschnitt gebildet ist, dessen Krümmung ausreichend ausgeprägt ist, um einen nicht vernachlässigbaren Lichtdurchtritt durch Brechung in dem Medium zu bewirken, wobei die Eintrittsabschnitte (58, 68) und die Austrittsabschnitte (59, 69), die mit jedem dieser Zwischenabschnitte verbunden sind, in gleicher Weise länglich sind.

6. Einrichtung nach Anspruch 4, die eine im wesentlichen vollständige Kompensation hinsichtlich der Temperatur gestattet, dadurch gekennzeichnet, daß die geometrische Form sowie des Herstellungsmaterial der gekrümmten Zwischenabschnitte (53, 54) derart gewählt sind, daß die jeweiligen Exponentialkoeffizienten "$k_1$" une "$k_2$" hinsichtlich der Änderungen des Brechungsindex Mediums sowie die jeweiligen scheinbaren Sensibilitäten "$q_1$" und "$q_2$" relativ zu den Änderungen der Temperatur des Mediums im wesentlichen der Beziehung $k_1 \cdot q_1 = k_2 \cdot q_2$ gehorchen.

**Claims**

1. Optical sensor device for determining the refractive index of a fluid, comprising:

— a first optical probe (21) of a kind involving a light conductive body composed of an input section (28) and an output section (29) connected to each other by an intermediate section (23), said intermediate section of said probe being at least the one to be immersed into said fluid and being adapted to conduct light from said input section to said output section whereby the amount of light exiting from said output section of said probe will vary linearly as a function of the refractive index of said fluid, and

— a light source (30) coupled to said input section (28) of said probe (21) for injecting a predetermined quantity of light in the input section,

the said device is characterized in comprising, for the determination of the refractive index of a fluid with reduction relative to a predetermined reference temperature, and for compensating or supercompensating for the signal errors due to the fluid refractive index varation with temperature and inherent to using a single channel probe, a second optical probe (22, 24, 38, 39, 40, 42) of a kind similar to the first optical probe and means (43) to device a signal corresponding to the difference between the amount of light exiting from the output sections of the first and the second optical probe, respectively, said intermediate sections (23, 24) corresponding to the said first and second probe being selected, on one hand, with respect to their geometry, in a manner such that they provide respective response sensitivities "$m_1$" and "$m_2$" to refractive index variations, "$m_1$" being greater than "$m_2$" and, on another hand, with respect to their constitutive material, in a manner such that they provide respective sensitivities "$q_1$" and "$q_2$" to temperature variations in this fluid, "$q_1$" being smaller than "$q_2$", so that said resulting signal devised by said means (43) constitutes a signal representative of said refractive index of the fluid after reduction to said reference temperature.

2. Device according to claim 1, characterized in that each of said intermediate sections (23, 24) is constituted by a prism comprising at least two reflective surfaces (26, 27, 34) adapted to successively reflect at least a fraction of the light from said input section (28, 38) toward said output section (29, 39) of each of said bodies.

3. Device according to claim 1, capable to provide a substantially perfect temperature compensation, characterized in that the geometrical shape and the constitutive material of each intermediate sections (23, 24) of said probes are chosen to provide, respectively, effective sensitivities "$m_1$" and "$m_2$" relative to the refractive index of the fluid, and apparent sensitivities "$q_1$" and "$q_2$" relative to temperature variations in this fluid, which substantially follow the equation $m_1 q_1 = m_2 q_2$.

4. Optical sensor device for determining the refractive index of a fluid, comprising:

— a first optical probe (51) of a kind involving a light conductive body composed of an input section (58) and an output section (59) connected to each other by an intermediate section (53, 54), said intermediate section of said probe being at least the one to be immersed into said fluid and being adapted to conduct light from said input section to said output section whereby the amount of light exiting from said output section of said probe will vary exponentially as a function of the refractive index of said fluid, and

— a light source (60) coupled to said input section (58) of said probe (51) for injecting a predetermined quantity of light in the input section,

the said device is characterized in comprising, for the determination of the refractive index of a fluid with reduction relative to a predetermined reference temperature, and for compensating or supercompensating for the signal errors due to the fluid refractive index variation with temperature and inherent to using a single channel probe, a second optical probe (52, 54, 68, 69, 70, 72) of a kind similar to the first optical probe and means (73) to device a signal corresponding to the ratio of the amount of light exiting from the output sections of the first and the second optical probe, respectively, said intermediate sections (53, 54) corresponding to the said first and second probe being selected, on one hand, with respect to their geometry, in a manner such that they provide respective parameters "$k_1$" and "$k_2$" which appear in the exponents of exponential functions linking the amount of light exiting from the output sections of the first and second optical probes, respectively, to the refractive index of the fluid, "$k_1$" being larger than "$k_2$", and, on another hand, with respect to their constitutive material, in a manner such that they provide respective sensitivities "$q_1$" and "$q_2$" to temperature variations in this fluid, "$q_1$" being smaller than "$q_2$", so that said resulting signal devised by said means (73) constitutes a signal representative of said refractive index of the fluid reduced with respect to said reference temperature.

5. Device according to claim 4, characterized in that each of said intermediate section (53, 54) is constituted by an arcuated curvilinear section whose curvature is sufficient to enable a non-negligible fraction of the light to refractively pass into the fluid, said input section (58, 68) and output section (59, 69) to which each of the intermediate section is connected being also longilinear.

6. Device according to claim 4, capable to provide a substantially perfect temperature compensation, characterized in that the geometrical shape and the constitutive material of each arcuated intermediate sections (53, 54) are chosen to provide, respectively, exponential parameters "$k_1$" and "$k_2$" relative to the refractive index of the fluid, as well as apparent sensitivities "$q_1$" and "$q_2$" relative to temperature variations in this fluid, which substantially follow the equation $k_1 q_1 = k_2 q_2$.

FIG. 1a

FIG. 1b

FIG. 2a

FIG. 2b

FIG. 3

FIG. 4